# EUROPEAN PATENT SPECIFICATION

(11) **EP 2 907 553 B1**
(45) Date of publication and mention of the grant of the patent: **11.10.2017**
(21) Application number: 15153962.4
(22) Date of filing: 05.02.2015
(51) Int. Cl.: B29C 53/56, A63B 49/10, B29L 9/00

(54) **Racket**
Schläger
Raquette

(30) Priority: 12.02.2014 JP 2014024045
(43) Date of publication of application: 19.08.2015
(73) Proprietor: Dunlop Sports Co., Ltd., Hyogo 651-0072 (JP)
(72) Inventor: Yamamoto, Yosuke, Hyogo 651-0072 (JP)
(74) Representative: Manitz Finsterwald Patentanwälte PartmbB

(56) References cited:
- EP-A2- 0 046 204
- WO-A2-2010/147982
- CN-U- 203 264 204
- DE-U1- 29 805 032
- JP-A- 2000 014 833
- US-A- 4 399 992
- US-A- 4 460 423

## Description

### BACKGROUND OF THE INVENTION

### Field of the Invention

The present invention relates to rackets used for tennis and the like.

### Description of the Related Art

The frame of a tennis racket is formed from a fiber reinforced resin. The matrix resin of the fiber reinforced resin is an epoxy resin. The reinforcing fibers of the fiber reinforced resin are carbon fibers. The reinforcing fibers are long fibers. The frame is formed by winding a plurality of prepregs and curing the epoxy resin included in each prepreg.

A racket having a frame formed from a fiber reinforced resin is disclosed in JP2013-172915 (US2013/0244817). The racket includes a foam. The foam enhances rigidity of the racket. Furthermore, the foam enhances vibration absorptivity of the racket. The racket is excellent in feel at impact.

Since the racket disclosed in JP2013-172915 includes a large foam, a weight thereof is large. Players cannot swing the racket quickly.

A racket according to the preamble of claim 1 is disclosed in CN 203 264 204 U. Further prior art rackets are disclosed in DE 298 05 032, WO 2010/147982, EP 0 046 204 A2, JP2000014833, US 4,460,423, and US4,399,992.

An object of the present invention is to provide a racket that is excellent in feel at impact and is lightweight.

### SUMMARY OF THE INVENTION

This object is satisfied by a racket having the features of claim 1.

A racket according to the present invention includes a frame having a head formed from a fiber reinforced resin and with the head being hollow, wherein the hollow head includes an inside part, an outside part and two middle parts, wherein the inside part, the outside part and the two middle parts each have an inner surface forming inner surfaces of the frame; and a foam joined to a part of one of the inner surfaces of the frame and containing bubbles.

The foam partially occupies a space of the frame, with air being present in the remaining portion of the space of the frame.

In a cross section of the racket, a ratio P of an area of the foam to an area S1 of a space of the frame is equal to or greater than 5% and equal to or less than 50%, said area S1 of a space of the frame being an area surrounded by the inner surfaces of the frame and the ratio P being measured at a cross section perpendicular to a direction in which the frame extends at a position where the foam is present in the frame.

The racket according to the present invention includes a foam containing a large number of bubbles thereby to be excellent in feel at impact. The foam is joined to an inner surface of the frame. Therefore, the foam does not exclusively occupy a space of the frame. The racket is lightweight.

Preferably, a density of the foam is equal to or less than 0.50 g/cm³. Preferably, a 25%CLD of the foam measured in accordance with "JIS K6254" standard is equal to or less than 0.10 MPa.

Preferably, a central angle θ of the foam at a center point of the frame is equal to or greater than 100°.

A manufacturing method for the racket according to the present invention includes the steps of:
laminating a foam piece containing a large number of bubbles onto a part of a surface of a prepreg having a matrix resin and a large number of fibers;
winding the prepreg into a tubular shape to locate the foam piece on an inner surface of the prepreg; and
curing the matrix resin.

### BRIEF DESCRIPTION OF THE DRAWINGS

FIG. 1 is a front view of a racket according to one embodiment of the present invention;
FIG. 2 is a side view of the racket in FIG. 1;
FIG. 3 is an enlarged cross-sectional view taken along a line III-III in FIG. 1;
FIG. 4 is a front view of a prepreg and foam pieces used for manufacturing the racket in FIG. 1;
FIG. 5 is an enlarged cross-sectional view taken along a line V-V in FIG. 4;
FIG. 6 is a perspective view showing the prepreg and foam pieces in FIG. 4 together with a tube;
FIG. 7 is a cross-sectional view of a racket according to another embodiment of the present invention;
FIG. 8 is a cross-sectional view of a racket according to still another embodiment of the present invention;
FIG. 9 is a cross-sectional view of a racket according to still another embodiment of the present invention;
FIG. 10 is a front view of a prepreg and a foam piece used for manufacturing the racket in FIG. 9;
FIG. 11 is a cross-sectional view of a racket according to still another embodiment of the present invention;
FIG. 12 is a front view of a racket according to still another embodiment of the present invention; and
FIG. 13 is a front view of a prepreg and foam pieces used for manufacturing the racket in FIG. 12.

### DESCRIPTION OF THE PREFERRED EMBODIMENTS

The following will describe in detail the present invention based on preferred embodiments with reference to the accompanying drawings.

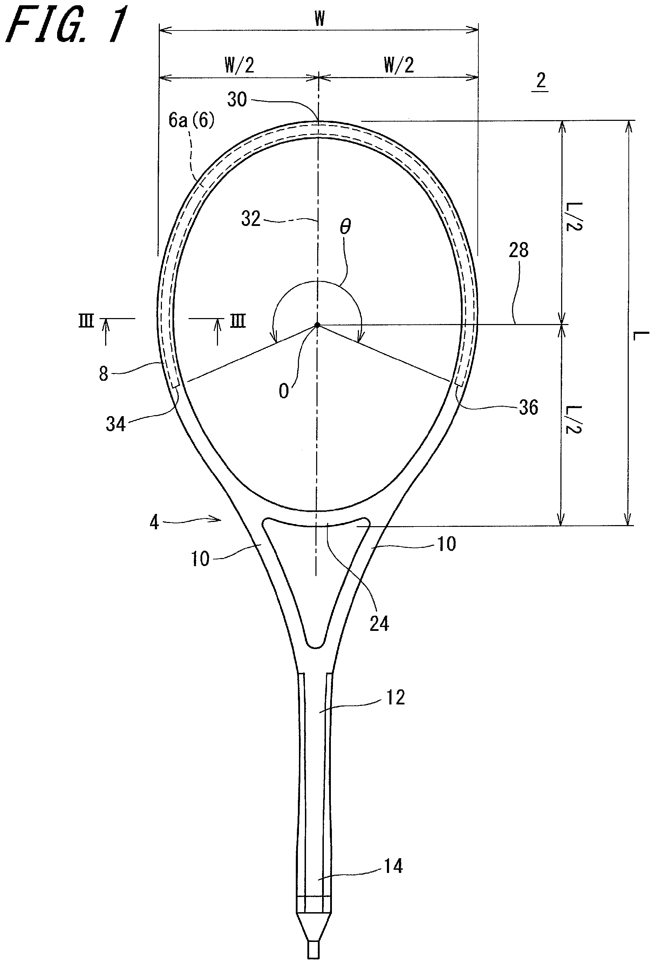

A racket 2 shown in FIGS. 1 to 3 has a frame 4, a first foam 6a and a second foam 6b. The frame 4 includes a head 8, two throats 10, a shaft 12, and a grip 14. A grommet, a grip tape, an end cap, and the like are attached to the racket 2. Furthermore, a string is stretched on the racket 2. The racket 2 is for use in regulation-ball tennis. In FIG. 1, the up-down direction is the axial direction of the racket 2, and the right-left direction is the width direction of the racket 2.

The frame 4 is formed from a fiber reinforced resin. The matrix resin of the fiber reinforced resin is a thermosetting resin. The thermosetting resin is typically an epoxy resin. The fibers of the fiber reinforced resin are typically carbon fibers. The fibers are long fibers.

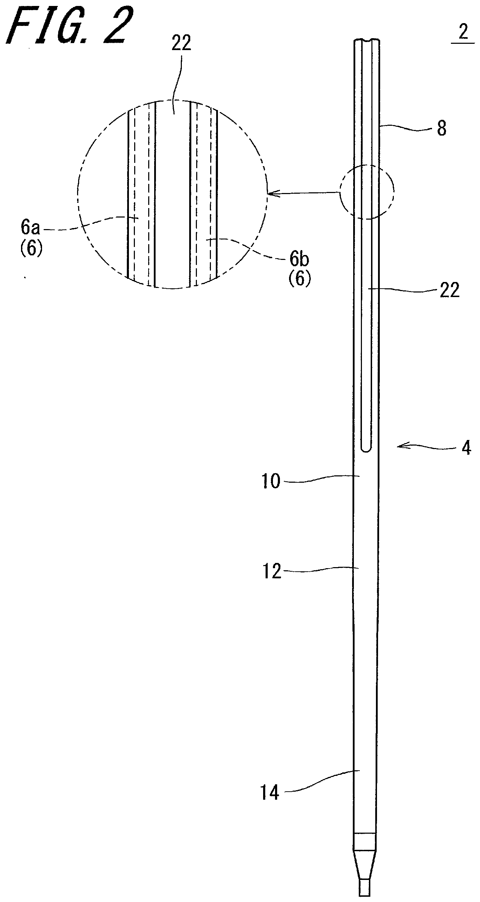

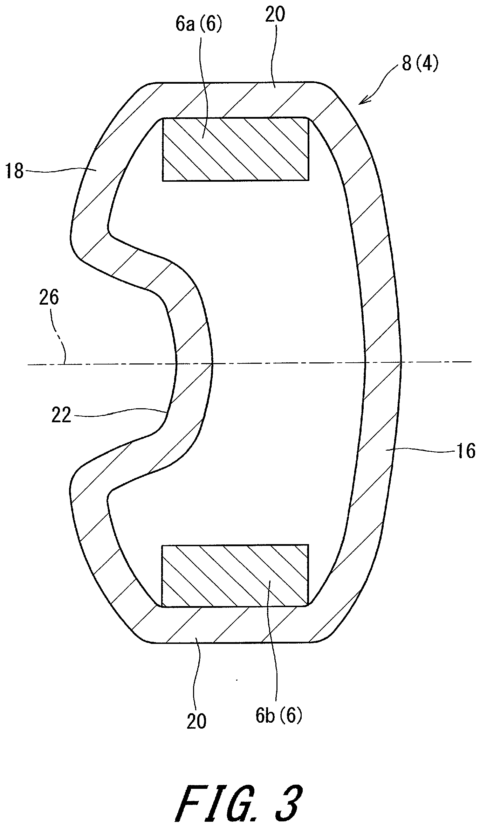

The head 8 forms the contour of a ball-hitting face. The front shape of the head 8 is substantially an ellipse. The major axial direction of the ellipse coincides with the axial direction of the frame 4. The minor axial direction of the ellipse coincides with the width direction of the frame 4. As is obvious from FIG. 3, the head 8 is hollow. The head 8 has an inside part 16, an outside part 18 and two middle parts 20. The outside part 18 has a gut groove 22. As shown in FIG. 2, the gut groove 22 extends along the circumferential direction of the head 8. A grommet (not shown) is embedded in the gut groove 22.

One end of each throat 10 is connected to the head 8. The throat 10 is connected at the vicinity of the other end thereof to the other throat 10. The throat 10 extends from the head 8 to the shaft 12. The shaft 12 extends from the location where the two throats 10 are connected to each other. The shaft 12 is formed so as to be integrally connected to the throats 10. The grip 14 is formed so as to be integrally connected to the shaft 12. A portion of the head 8 that is sandwiched between the two throats 10 is a yoke 24.

As shown in FIG. 3, the foams 6 are joined to respective inner surfaces of the middle parts 20. Each foam 6 is spaced apart from the inside part 16. The foam 6 is spaced apart from the outside part 18. The line shown by the reference sign 26 in FIG. 3 coincides with a ball-hitting face. The shape of the first foam 6a and the shape of the second foam 6b are symmetrical about the ball-hitting face.

The foam 6 includes a matrix and a large number of bubbles dispersed in the matrix. The material of the matrix is a resin composition. A typical base resin of the resin composition is polyurethane. The material of the matrix may be a rubber composition.

Typically, bubbles (cells) are formed by foaming of thermally-decomposed type foaming agent. Examples of preferable thermally-decomposed type foaming agent include an azo compound, a nitroso compound and a triazole compound. A foam may be obtained by a physical foaming method, such as mechanical agitation process.

The foam 6 may include closed cells or may include open cells. From the view point that the foam 6 is less likely to absorb water, it is preferable that the closed cells are included.

The foam 6 can absorb a shock at impact. Furthermore, the foam 6 can contribute to vibration damping of the frame 4. The racket 2 having the foam 6 provides an excellent feel at impact.

As is obvious from FIG. 3, the foam 6 has a shape of a sheet. The foam 6 partially occupies a space of the frame 4. Air is present in the remaining portion of the space of the frame 4. In other words, the foam 6 does not exclusively occupy the space. The foam 6 is lightweight. Therefore, the racket 2 is lightweight.

The foam 6 is positioned in the frame 4. Therefore, the foam 6 is not worn away even if the frame 4 collides against the ground by a stroke of a player. In addition, since players are not aware of the existence of the foam 6, the foam 6 never obstructs playing.

A ratio P of an area S2 of the foam 6 to an area S1 of the space of the frame 4 is preferably equal to or greater than 5% and equal to or less than 50%. The racket 2 having a ratio P of equal to or greater than 5% is excellent in feel at impact. In this respect, the ratio P is particularly preferably equal to or greater than 10%. The racket 2 having a ratio P of equal to or less than 50% is lightweight. A lightweight racket is easy to swing. In this respect, the ratio P is particularly preferably equal to or less than 40%. The ratio P is measured at a position where the foam 6 is present in the frame 4. The ratio P is measured at a cross section perpendicular to a direction in which the frame 4 extends. The area S1 is an area of a diagram surrounded by the inner surface of the frame 4. The racket 2 according to the embodiment has the first foam 6a and the second foam 6b, as already mentioned. In the racket 2, the total of the area of the first foam 6a and the area of the second foam 6b is the area S2.

The foam 6 has a density of preferably equal to or less than 0.50 g/cm³. The foam 6 contributes to feel at impact of the racket 2. In addition, the racket 2 having the foam 6 is lightweight. In these respect, the density is particularly preferably equal to or less than 0.35 g/cm³. In respect of the strength of the foam 6, the density is preferably equal to or greater than 0.10 g/cm³. The density is measured in accordance with "JIS K6401" standard.

The foam 6 has a 25%CLD of preferably equal to or less than 0.10 MPa. The foam 6 contributes to feel at impact of the racket 2. In this respect, the 25%CLD is particularly preferably equal to or less than 0.06 MPa. In respect of the strength of the foam 6, the 25%CLD is preferably equal to or greater than 0.01 MPa. The 25%CLD is a compression load deflection measured in accordance with "JIS K6254" standard. The 25%CLD is a pressure needed to compressively deform the foam 6 by 25%.

In FIG. 1, an arrow L indicates the length of the head 8, and an arrow W indicates the width of the head 8. A reference sign 28 indicates a straight line in which a distance from a top 30 is 1/2 of the length L. A reference sign 32 indicates an axis line of the racket 2. A reference sign O indicates the center point of the frame 4. The straight line 28 and the axis line 32 intersect at the center point O.

In FIG. 1, a reference sign 34 indicates one end of the foam 6, and a reference sign 36 indicates the other end of the foam 6. A reference sign θ indicates a central angle of the foam 6 at the center point O. The central angle θ is preferably equal to or greater than 100°. The racket 2 having a central angle θ of equal to or greater than 100° is excellent in feel at impact. In this respect, the central angle θ is more preferably equal to or greater than 150°, and particularly preferably equal to or greater than 180°. In respect of weight saving, the central angle θ is preferably equal to or less than 240°.

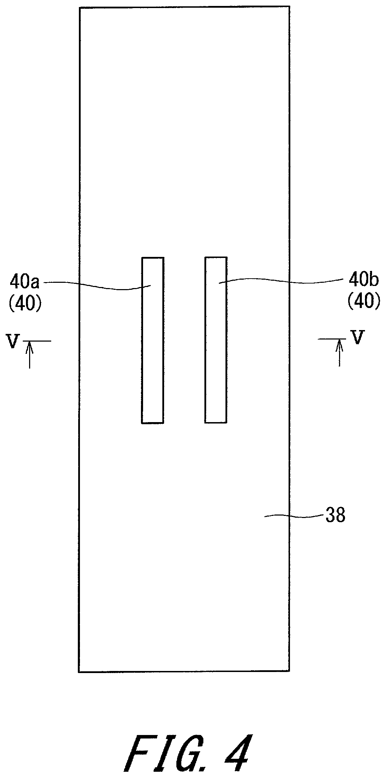

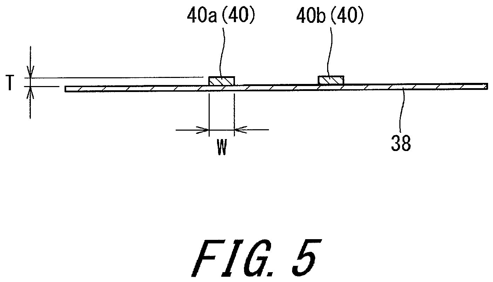

FIGS. 4 and 5 show a prepreg 38, a first foam piece 40a and a second foam piece 40b. The prepreg 38 includes a matrix resin and a large number of long fibers aligned with each other. The matrix resin is a thermosetting resin. Each foam piece 40 includes a large number of bubbles. The foam piece 40 is laminated onto the prepreg 38 and joined to the prepreg 38. The joining can be performed by an adhesive. In FIG. 5, an arrow W indicates the width of the foam piece 40, and an arrow T indicates the thickness of the foam piece 40.

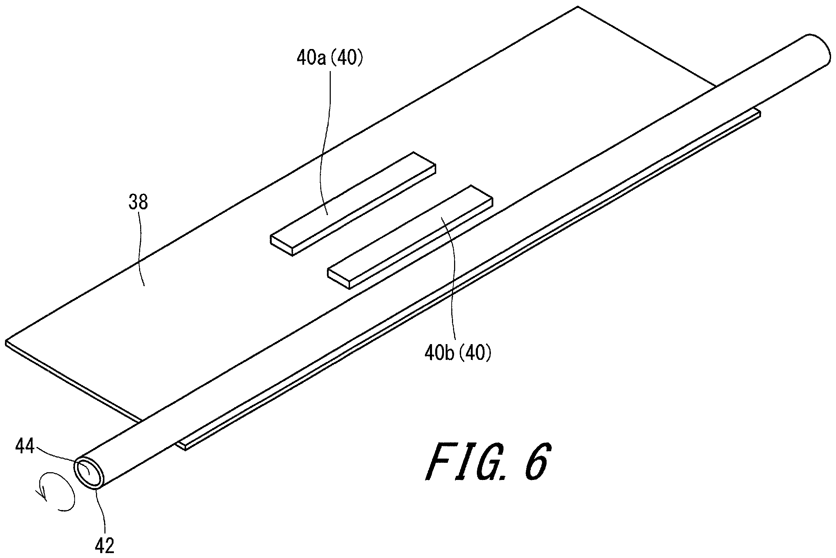

FIG. 6 shows a tube 42 and a mandrel 44 inserted into the tube 42. A prepreg 38 is wound about the tube 42. Prepreg 38 has a tubular shape by the winding. The foam piece 40 is positioned on the inner surface of the prepreg 38 by the winding.

The prepreg 38, the foam pieces 40 and the tube 42 are put into a mold after the mandrel 44 is extracted from the tube 42. In the mold, air is injected into the tube 42 thereby to inflate the tube 42. The prepreg 38 is pressed against the cavity surface of the mold by the inflation. The prepreg 38 is heated to cure the matrix resin. The frame 4 is obtained by the curing. The first foam 6a is formed of the first foam piece 40a. The second foam 6b is formed of the second foam piece 40b. The first foam piece 40a and the second foam piece 40b have heat resistance property to the extent that they are not damaged by the heating of the prepreg 38.

In the manufacturing method, the position of the foam 6 can be precisely controlled. In the manufacturing method, the volume of the foam 6 can be precisely controlled. In the manufacturing method, the expansion ratio of the foam 6 can be precisely controlled.

Specific examples of the foam piece 40 include "PORON LE-20", "PORON SR-S-24", "PORON SR-L-20", "PORON SR-L-24" and "PORON BB-32" manufactured by INOAC CORPORATION.

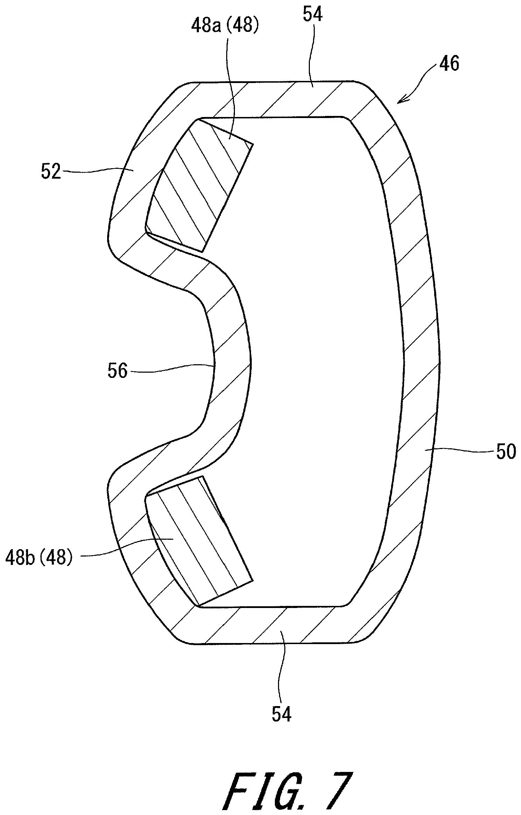

FIG. 7 is a cross-sectional view of a racket according to another embodiment of the present invention. The racket includes a head 46, a first foam 48a and a second foam 48b. The head 46 has an inside part 50, an outside part 52 and two middle parts 54. The outside part 52 has a gut groove 56. Each foam 48 is joined to an inner surface of the outside part 52. The constitution of the racket other than the position of the foam 48 is the same as that of the racket 2 shown in FIGS. 1 to 3.

The material of the foam 48 is the same as the material of the foam 6 shown in FIG. 3. Also in the racket, the foam 48 can absorb a shock at impact. Furthermore, the foam 48 can contribute to vibration damping of the frame. The racket having the foam 48 provides an excellent feel at impact. The foam 48 partially occupies a space of the frame. Air is present in the remaining portion of the space of the frame. The racket is lightweight.

Also in the racket, a ratio P of an area S2 of the foam 48 to an area S1 of the space is preferably equal to or greater than 5% and equal to or less than 50%. The ratio P is particularly preferably equal to or greater than 10%. The ratio P is particularly preferably equal to or less than 40%.

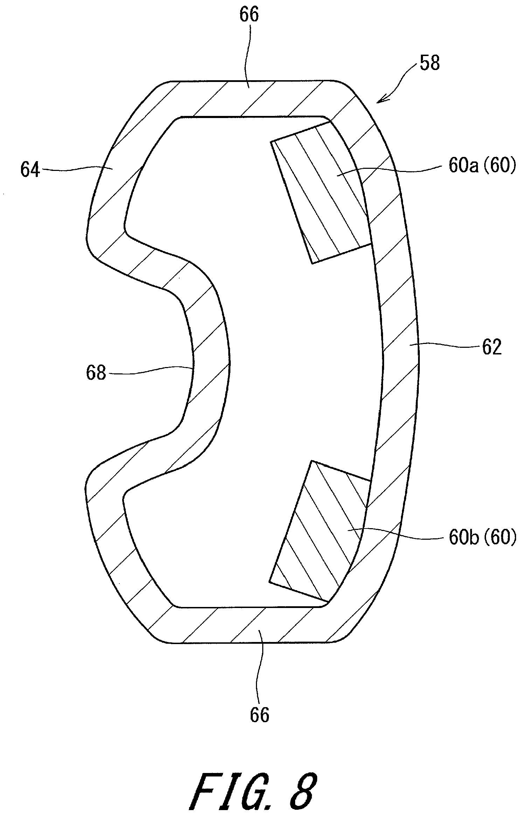

FIG. 8 is a cross-sectional view of a racket according to still another embodiment of the present invention. The racket includes a head 58, a first foam 60a and a second foam 60b. The head 58 has an inside part 62, an outside part 64 and two middle parts 66. The outside part 64 has a gut groove 68. Each foam 60 is joined to an inner surface of the inside part 62. The constitution of the racket other than the position of the foam 60 is the same as that of the racket 2 shown in FIGS. 1 to 3.

The material of the foam 60 is the same as the material of the foam 6 shown in FIG. 3. Also in the racket, the foam 60 can absorb a shock at impact. Furthermore, the foam 60 can contribute to vibration damping of the frame. The racket having the foam 60 provides an excellent feel at impact. The foam 60 partially occupies a space of the frame. Air is present in the remaining portion of the space of the frame. The racket is lightweight.

Also in the racket, a ratio P of an area S2 of the foam 60 to an area S1 of the space is preferably equal to or greater than 5% and equal to or less than 50%. The ratio P is particularly preferably equal to or greater than 10%. The ratio P is particularly preferably equal to or less than 40%.

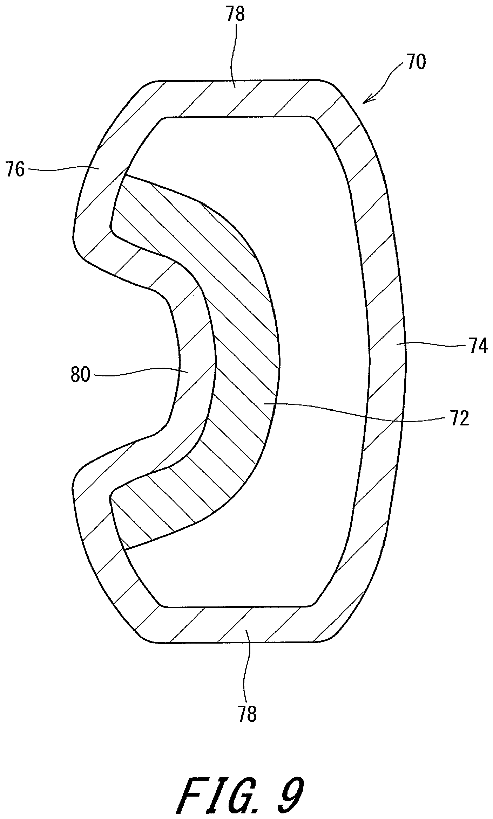

FIG. 9 is a cross-sectional view of a racket according to still another embodiment of the present invention. The racket includes a head 70 and a foam 72. The head 70 has an inside part 74, an outside part 76 and two middle parts 78. The outside part 76 has a gut groove 80. The foam 72 is joined to an inner surface of the outside part 76. The constitution of the racket other than the foam 72 is the same as that of the racket 2 shown in FIGS. 1 to 3.

The material of the foam 72 is the same as the material of the foam 6 shown in FIG. 3. Also in the racket, the foam 72 can absorb a shock at impact. Furthermore, the foam 72 can contribute to vibration damping of the frame. The racket having the foam 72 provides an excellent feel at impact. The foam 72 partially occupies a space of the frame. Air is present in the remaining portion of the space of the frame. The racket is lightweight.

Also in the racket, a ratio P of an area S2 of the foam 72 to an area S1 of the space is preferably equal to or greater than 5% and equal to or less than 50%. The ratio P is particularly preferably equal to or greater than 10%. The ratio P is particularly preferably equal to or less than 40%.

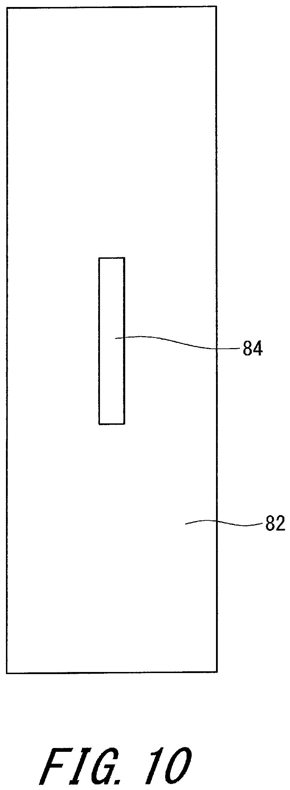

FIG. 10 shows a prepreg 82 and a foam piece 84. The material of the prepreg 82 is the same as the material of the prepreg 38 shown in FIGS. 4 to 6. The material of the foam piece 84 is the same as the material of the foam piece 40 shown in FIGS. 4 to 6. The foam piece 84 is laminated onto the prepreg 82 and joined to the prepreg 82. The prepreg 82 is wound thereby to have a tubular shape. The foam piece 84 is positioned on an inner surface of the prepreg 82 by the winding. The prepreg 82 is heated to cure the matrix resin. A frame is obtained by the curing. A foam 72 is formed of the foam piece 84.

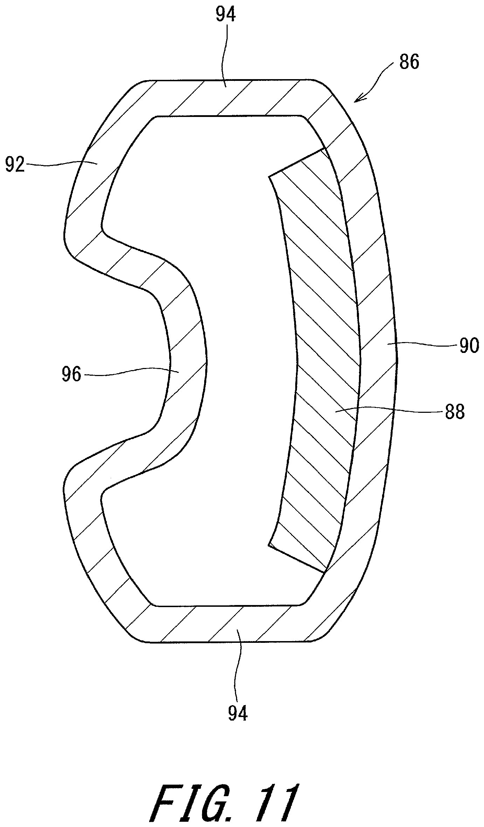

FIG. 11 is a cross-sectional view of a racket according to still another embodiment of the present invention. The racket includes a head 86 and a foam 88. The head 86 has an inside part 90, an outside part 92 and two middle parts 94. The outside part 92 has a gut groove 96. The foam 88 is joined to an inner surface of the inside part 90. The constitution of the racket other than the foam 88 is the same as that of the racket 2 shown in FIGS. 1 to 3.

The material of the foam 88 is the same as the material of the foam 6 shown in FIG. 3. Also in the racket, the foam 88 can absorb a shock at impact. Furthermore, the foam 88 can contribute to vibration damping of the frame. The racket having the foam 88 provides an excellent feel at impact. The foam 88 partially occupies a space of the frame. Air is present in the remaining portion of the space of the frame. The racket is lightweight.

Also in the racket, a ratio P of an area S2 of the foam 88 to an area S1 of the space is preferably equal to or greater than 5% and equal to or less than 50%. The ratio P is particularly preferably equal to or greater than 10%. The ratio P is particularly preferably equal to or less than 40%.

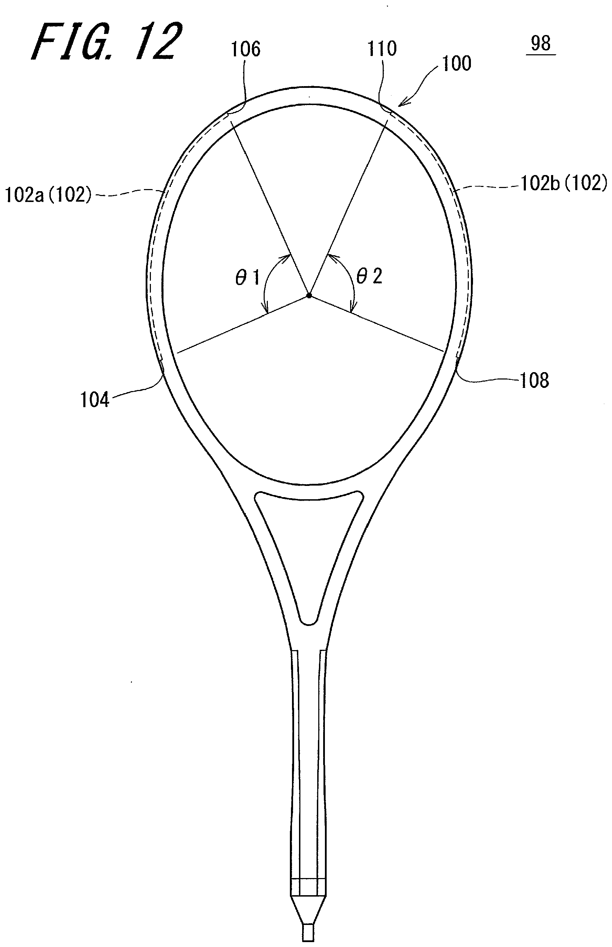

FIG. 12 is a front view of a racket 98 according to still another embodiment of the present invention. The racket 98 includes a head 100, a first foam 102a and a second foam 102b. In the circumferential direction of the head 100, the first foam 102a is spaced away from the second foam 102b. The constitution of the racket 98 other than the foams 102 is the same as that of the racket 2 shown in FIGS. 1 to 3.

The material of each foam 102 is the same as the material of the foam 6 shown in FIG. 3. Also in the racket 98, the foam 102 can absorb a shock at impact. Furthermore, the foam 102 can contribute to vibration damping of the frame. The racket 98 having the foam 102 provides an excellent feel at impact. The foam 102 partially occupies a space of the frame. Air is present in the remaining portion of the space of the frame. The racket 98 is lightweight.

In FIG. 12, a reference sign 104 indicates one end of the first foam 102a, and a reference sign 106 indicates the other end of the first foam 102a. A reference sign θ1 indicates a central angle of the first foam 102a at the center point O. A reference sign 108 indicates one end of the second foam 102b, and a reference sign 110 indicates the other end of the second foam 102b. A reference sign θ2 indicates a central angle of the second foam 102b at the center point O. In the racket 98, the central angle θ is the sum of the central angle θ1 and the central angle θ2. The central angle θ is preferably equal to or greater than 100°. The racket 98 having a central angle θ of equal to or greater than 100° is excellent in feel at impact. In this respect, the central angle θ is more preferably equal to or greater than 150°, and particularly preferably equal to or greater than 180°. In respect of weight saving, the central angle θ is preferably equal to or less than 240°.

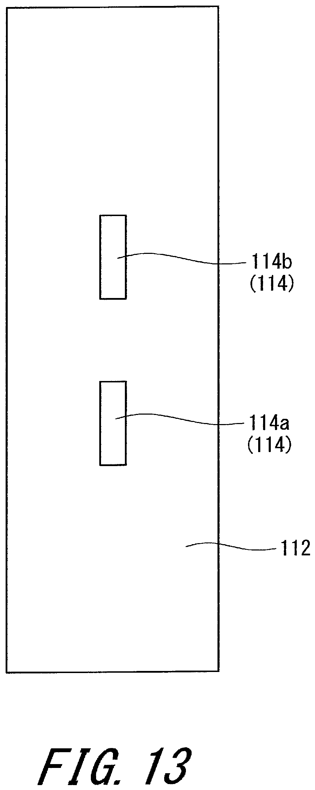

FIG. 13 shows a prepreg 112, a first foam piece 114a and a second foam piece 114b. The material of the prepreg 112 is the same as the material of the prepreg 38 shown in FIGS. 4 to 6. The material of each foam piece 114 is the same as the material of the foam piece 40 shown in FIGS. 4 to 6. The foam piece 114 is laminated onto the prepreg 112 and joined to the prepreg 112. The prepreg 112 is wound thereby to have a tubular shape. The foam piece 114 is positioned on an inner surface of the prepreg 112 by the winding. The prepreg 112 is heated to cure the matrix resin. A frame is obtained by the curing. The first foam 102a is formed of the first foam piece 114a. The second foam 102b is formed of the second foam piece 114b.

The material of the first foam 102a may differ from the material of the second foam 102b. The density of the first foam 102a may differ from the density of the second foam 102b. The size of the first foam 102a may differ from the size of the second foam 102b.

The racket may include three or more foams. In this case, the sum of central angles of each of the foams is the central angle θ. The central angle θ is preferably equal to or greater than 100°. The racket having a central angle θ of equal to or greater than 100° is excellent in feel at impact. In this respect, the central angle θ is more preferably equal to or greater than 150°, and particularly preferably equal to or greater than 180°. In respect of weight saving, the central angle θ is preferably equal to or less than 240°. These foams may be different from each other in their material, density, size or the like.

### EXAMPLES

### [Example 1]

The racket shown in FIGS. 1 to 3 was produced. Foam pieces ("PORON SR-S-24" as mentioned above) were used for the racket. In the foam pieces, the density is 0.24 g/cm³, the width W is 5.0 mm, and the length is 680 mm.

### [Examples 2 to 4]

Rackets of Examples 2 to 4 were obtained in the same manner as Example 1, except that length of each foam piece was as shown in Tale 1 below.

### [Examples 5 to 13]

Rackets of Examples 5 to 13 were obtained in the same manner as Example 1, except that foam pieces as shown in Tables 2 and 3 were used.

### [Comparative Example 1]

A racket of Comparative Example 1 was obtained in the same manner as Example 1, except that no foam piece was used.

### [Comparative Example 2]

A racket was obtained by locating a resin composition containing a foaming agent between a prepreg and a tube, and foaming the foaming agent during heating of the prepreg. In the racket, the foam exclusively occupies the space of the head.

### [Evaluation]

A grommet, a grip tape, and an end cap were attached to each racket. Furthermore, a string was stretched on the racket. Players hit tennis balls with the rackets and evaluated feel at impact and easiness of swing based on the following criteria.
A: good
B: not too bad
C: bad
The results are shown in Tables 1 to 3 below.

**Table 1 Results of Evaluation**

| | Ex. 2 | Ex. 3 | Ex. 1 | Ex. 4 |
|---|---|---|---|---|
| foam piece | | | | |
| trade name | SR-S-24 | SR-S-24 | SR-S-24 | SR-S-24 |
| density (g/cm³) | 0.24 | 0.24 | 0.24 | 0.24 |
| 25%CLD (MPa) | 0.012 | 0.012 | 0.012 | 0.012 |
| thickness (mm) | 3.0 | 3.0 | 3.0 | 3.0 |
| width (mm) | 5.0 | 5.0 | 5.0 | 5.0 |
| length (mm) | 400 | 480 | 680 | 800 |
| number | 2 | 2 | 2 | 2 |

| racket | | | | |
|---|---|---|---|---|
| cross section | FIG. 3 | FIG. 3 | FIG. 3 | FIG. 3 |
| P (%) | 15 | 15 | 15 | 15 |
| weight (g) | +2.88 | +3.46 | +4.90 | +5.76 |
| heel at impact | B | B | A | A |
| swing | A | A | A | A |

**Table 2 Results of Evaluation**

| | Ex. 5 | Ex. 6 | Ex. 7 | Ex. 8 | Ex. 9 | Ex. 10 |
|---|---|---|---|---|---|---|
| foam piece | | | | | | |
| trade name | SR-S-24 | SR-L-20 | SR-L-20 | SR-L-24 | LE-20 | LE-20 |
| density (g/cm³) | 0.24 | 0.20 | 0.20 | 0.24 | 0.20 | 0.20 |
| 25%CLD (MPa) | 0.012 | 0.018 | 0.018 | 0.027 | 0.017 | 0.017 |
| thickness (mm) | 5.0 | 3.0 | 1.5 | 5.0 | 3.0 | 5.0 |
| width (mm) | 5.0 | 5.0 | 5.0 | 5.0 | 5.0 | 5.0 |
| length (mm) | 680 | 680 | 680 | 680 | 680 | 680 |
| number | 2 | 2 | 2 | 2 | 2 | 2 |

| racket | | | | | | |
|---|---|---|---|---|---|---|
| cross section | FIG. 3 | FIG. 3 | FIG. 3 | FIG. 3 | FIG. 3 | FIG. 3 |
| P (%) | 25 | 15 | 8 | 25 | 15 | 25 |
| weight (g) | +8.16 | +4.08 | +2.04 | +8.16 | +4.08 | +6.80 |
| feel at impact | A | A | B | A | A | A |
| swing | B | A | A | B | A | A |

**Table 3 Results of Evaluation**

| | Ex. 11 | Ex. 12 | Ex. 13 | Comp. Ex. 1 | Comp. Ex. 2 |
|---|---|---|---|---|---|
| foam piece | | | | | |
| trade name | SR-S-24 | BB-32 | SR-S-24 | - | - |
| density (g/cm³) | 0.24 | 0.32 | 0.24 | - | - |
| 25%CLD (MPa) | 0.012 | 0.060 | 0.012 | - | - |
| thickness (mm) | 3.0 | 3.0 | 5.0 | - | - |
| width (mm) | 15.0 | 5.0 | 15.0 | - | - |
| length (mm) | 680 | 680 | 540 | - | - |
| number | 1 | 2 | 1 | - | - |

| racket | | | | | |
|---|---|---|---|---|---|
| cross section | FIG. 11 | FIG. 3 | FIG. 11 | - | - |
| P (%) | 23 | 15 | 38 | 0 | 100 |
| weight (g) | +7.34 | +6.53 | +9.72 | 0 | +32.64 |
| feel at impact | A | A | A | C | A |
| swing | A | A | B | A | C |

As shown in Tables 1 to 3, the racket of each Example is excellent in feel at impact and easiness of swing. From the results of evaluation, advantages of the present invention are clear.

The racket according to the present invention can also be used for sports other than regulation-ball tennis. The above descriptions are merely illustrative examples, and various modifications can be made without departing from the principles of the present invention.

## Claims

1. A racket (2) comprising:
a frame (4) having a head (8; 46; 58; 70; 86; 100) formed from a fiber reinforced resin and with the head (8; 46; 58; 70; 86; 100) being hollow, wherein the hollow head (8; 46; 58; 70; 86; 100) includes an inside part (16; 50; 62; 74; 90), an outside part (18; 52; 68; 80; 96) and two middle parts (20; 54; 66; 78; 94), wherein the inside part (16; 50; 62; 74; 90), the outside part (18; 52; 68; 80; 96) and the two middle parts (20; 54; 66; 78; 94) each have an inner surface forming inner surfaces of the frame (4); and
a foam (6; 48; 60; 72; 88; 102; 114) joined to a part of one of the inner surfaces of the frame (4) and containing bubbles,
**characterized in that**
the foam (6; 48; 60; 72; 88; 102; 114) partially occupies a space of the frame (4),
**in that** air is present in the remaining portion of the space of the frame (4), and
**in that**, in a cross section of the racket (2), a ratio P of an area of the foam (6; 48; 60; 72; 88; 102; 114) to an area S1 of the space of the frame (4) is equal to or greater than 5% and equal to or less than 50%, said area S1 of the space of the frame (4) being an area surrounded by the inner surfaces of the frame (4) and the ratio P being measured at a cross section perpendicular to a direction in which the frame (4) extends at a position where the foam (6; 48; 60; 72; 88; 102; 114) is present in the frame (4).

2. The racket (2) according to claim 1, wherein the foam (6; 48; 60; 72; 88; 102; 114) has a density of equal to or less than 0.50 g/cm³.

3. The racket (2) according to claim 1 or claim 2, wherein the foam (6; 48; 60; 72; 88; 102; 114) has a 25% CLD measured in accordance with "JIS K6254" standard of equal to or less than 0.10 MPa.

4. The racket (2) according to any one of claims 1 to 3, wherein a central angle θ of the foam (6; 102) at a center point (O) of the frame (4) is equal to or greater than 100 ° , wherein the central angle θ is formed between one end (34) of the foam, the center point (O) of the frame (4) and the other end (36) of the foam.

5. The racket (2) according to any one of claims 1 to 4, wherein the bubbles are formed by foaming of a thermally-decomposed type foaming agent.

6. A method for manufacturing a racket (2) comprising a frame (4) having a head (8; 46; 58; 70; 86; 100) formed from a fiber reinforced resin and with the head (8; 46; 58; 70; 86; 100) being hollow, wherein the hollow head (8; 46; 58; 70; 86; 100) includes an inside part (16; 50; 62; 74; 90), an outside part (18; 52; 68; 80; 96) and two middle parts (20; 54; 66; 78; 94), wherein the inside part (16; 50; 62; 74; 90), the outside part (18; 52; 68; 80; 96) and the two middle parts (20; 54; 66; 78; 94) each have an inner surface forming inner surfaces of the frame (4); and
a foam (6; 48; 60; 72; 88; 102; 114) joined to a part of one of the inner surfaces of the frame (4) and containing bubbles,
wherein the foam (6; 48; 60; 72; 88; 102; 114) partially occupies a space of the frame (4),
wherein air is present in the remaining portion of the space of the frame (4), and
wherein, in a cross section of the racket (2), a ratio P of an area of the foam (6; 48; 60; 72; 88; 102; 114) to an area S1 of the space of the frame (4) is equal to or greater than 5% and equal to or less than 50%, said area S1 of the space of the frame (4) being an area surrounded by the inner surfaces of the frame (4) and the ratio P being measured at a cross section perpendicular to a direction in which the frame (4) extends at a position where the foam (6; 48; 60; 72; 88; 102; 114) is present in the frame (4), the method comprising the steps of:
laminating a foam piece (40a, 40b; 84; 114a; 114b) containing bubbles onto a part of a surface of a prepreg (38; 82; 112) including a matrix resin and fibers;
winding the prepreg (38; 82; 112) into a tubular shape to locate the foam piece (40a, 40b; 84; 114a; 114b) on an inner surface of the prepreg (38; 82; 112); and
curing the matrix resin.

## Patentansprüche

1. Schläger (2), umfassend:
einen Rahmen (4) mit einem Kopf (8; 46; 58; 70; 86; 100), der aus einem faserverstärkten Harz gebildet ist, wobei der Kopf (8; 46; 58; 70; 86; 100) hohl ist, wobei der hohle Kopf (8; 46; 58; 70; 86; 100) einen Innenseitenteil (16; 50; 62; 74; 90), einen Außenseitenteil (18; 52; 68; 80; 96) und zwei Mittelteile (20; 54; 66; 78; 94) umfasst, wobei der Innenseitenteil (16; 50; 62; 74; 90), der Außenseitenteil (18; 52; 68; 80; 96) und die zwei Mittelteile (20; 54; 66; 78; 94) jeweils einen Innenfläche aufweisen, die Innenflächen des Rahmens (4) bilden; und
einen Schaum (6; 48; 60; 72; 88; 102; 114), der mit einem Teil von einer der Innenflächen des Rahmens (4) verbunden ist und Blasen enthält,
**dadurch gekennzeichnet, dass**
der Schaum (6; 48; 60; 72; 88; 102; 114) einen Raum in dem Rahmen (4) teilweise einnimmt,
dass Luft in dem verbleibenden Abschnitt des Raums des Rahmens (4) vorhanden ist, und
dass in einem Querschnitt des Schlägers (2) ein Verhältnis P einer Fläche des Schaums (6; 48; 60; 72; 88; 102; 114) zu einer Fläche S1 des Raums des Rahmens (4) gleich oder größer als 5 % und gleich oder kleiner als 50 % ist, wobei die Fläche S1 des Raums des Rahmens (4) eine Fläche ist, die von den Innenflächen des Rahmens (4) umgeben ist, und das Verhältnis P an einem Querschnitt senkrecht zu einer Richtung gemessen ist, in welcher sich der Rahmen (4) an eine Position erstreckt, an welcher der Schaum (6; 48; 60; 72; 88; 102; 114) in dem Rahmen (4) vorhanden ist.

2. Schläger (2) nach Anspruch 1,
wobei der Schaum (6; 48; 60; 72; 88; 102; 114) eine Dichte von gleich oder kleiner als 0,50 g/cm³ aufweist.

3. Schläger (2) nach Anspruch 1 oder Anspruch 2,
wobei der Schaum (6; 48; 60; 72; 88; 102; 114) eine 25 % CLD, gemessen gemäß dem Standard "JIS K6254", von gleich oder weniger als 0,10 MPa aufweist.

4. Schläger (2) nach einem der Ansprüche 1 bis 3,
wobei ein Mittelpunktswinkel θ des Schaums (6; 102) an einem Mittelpunkt (O) des Rahmens (4) gleich oder größer als 100° ist, wobei der Mittelpunktswinkel θ zwischen einem Ende (34) des Schaums, dem Mittelpunkt (O) des Rahmens (4) und dem anderen Ende (36) des Schaums gebildet ist.

5. Schläger (2) nach einem der Ansprüche 1 bis 4,
wobei die Blasen durch Schäumen eines Schäummittels vom thermisch zersetzenden Typ gebildet ist.

6. Verfahren zum Herstellen eines Schlägers (2), der einen Rahmen (4) mit einem Kopf (8; 46; 58; 70; 86; 100) umfasst, der aus einem faserverstärkten Harz gebildet ist, wobei der Kopf (8; 46; 58; 70; 86; 100) hohl ist, wobei der hohle Kopf (8; 46; 58; 70; 86; 100) einen Innenseitenteil (16; 50; 62; 74; 90), einen Außenseitenteil (18; 52; 68; 80; 96) und zwei Mittelteile (20; 54; 66; 78; 94) aufweist, wobei der Innenseitenteil (16; 50; 62; 74; 90), der Außenseitenteil (18; 52; 68; 80; 96) und die zwei Mittelteile (20; 54; 66; 78; 94) jeweils eine Innenfläche aufweisen, die Innenflächen des Rahmens (4) bilden; und
einen Schaum (6; 48; 60; 72; 88; 102; 114) umfasst, der mit einem Teil von einer der Innenflächen des Rahmens (4) verbunden ist und Blasen enthält,
wobei der Schaum (6; 48; 60; 72; 88; 102; 114) einen Raum des Rahmens (4) teilweise einnimmt,
wobei Luft in dem verbleibenden Abschnitt des Raums des Rahmens (4) vorhanden ist, und
wobei in einem Querschnitt des Schlägers (2) ein Verhältnis P einer Fläche des Schaums (6; 48; 60; 72; 88; 102; 114) zu einer Fläche S1 des Raums des Rahmens (4) gleich oder größer als 5 % und gleich oder kleiner als 50 % ist, wobei die Fläche S1 des Raums des Rahmens (4) eine Fläche ist, die von den Innenflächen des Rahmens (4) umgeben ist, und das Verhältnis P an einem Querschnitt senkrecht zu einer Richtung gemessen wird, in welcher sich der Rahmen (4) an eine Position erstreckt, an welcher der Schaum (6; 48; 60; 72; 88; 102; 114) in dem Rahmen (4) vorhanden ist, wobei das Verfahren die Schritte umfasst:
Laminieren eines Schaumstücks (40a, 40b; 84; 114a; 114b), das Blasen enthält, auf einen Teil einer Oberfläche eines Prepregs (38; 82; 112), welches ein Matrixharz und Fasern umfasst;
Wickeln des Prepregs (38; 82; 112) zu einer rohrförmigen Form, um das Schaumstück (40a, 40b; 84; 114a; 114b) auf einer Innenfläche des Prepregs (38; 82; 112) festzulegen; und
Aushärten des Matrixharzes.

## Revendications

1. Raquette (2) comprenant :
un cadre (4) ayant une tête (8 ; 46 ; 58 ; 70 ; 86 ; 100) formée en résine renforcée par des fibres, la tête (8 ; 46 ; 58 ; 70 ; 86 ; 100) étant creuse, dans laquelle la tête creuse (8 ; 46 ; 58 ; 70 ; 86 ; 100) inclut une partie intérieure (16 ; 52 ; 62 ; 74 ; 90), une partie extérieure (18 ; 52 ; 68 ; 80 ; 96) et deux parties médianes (20 ; 54 ; 66 ; 78 ; 94), dans laquelle la partie intérieure (16 ; 50 ; 62 ; 74 ; 90), la partie extérieure (18 ; 52 ; 68 ; 80 ; 96) et les deux parties médianes (20 ; 54 ; 66 ; 78 ; 94) ont chacune une surface intérieure formant des surfaces intérieures du cadre (4) ; et
une mousse (6 ; 48 ; 62 ; 72 ; 88 ; 102 ; 114) réunie à une partie de l'une des surfaces intérieures du cadre (4) et contenant des bulles,
**caractérisée en ce que** la mousse (6 ; 48 ; 62 ; 72 ; 88 ; 102 ; 114) occupe partiellement un espace du cadre (4),
**en ce que** de l'air est présent dans la portion restante de l'espace du cadre (4), et
**en ce que**, dans une section transversale de la raquette (2), un rapport P d'une superficie de la mousse (6 ; 48 ; 62 ; 72 ; 88 ; 102 ; 114) sur une superficie S1 de l'espace du cadre (4) est égale ou supérieure à 5 % et est égale ou inférieure à 50 %, ladite superficie S1 de l'espace du cadre (4) étant une superficie entourée par les surfaces intérieures du cadre (4), le rapport P étant mesuré au niveau d'une section transversale perpendiculaire à une direction dans laquelle le cadre (4) s'étend à une position à laquelle la mousse (6 ; 48 ; 62 ; 72 ; 88 ; 102 ; 114) est présente dans le cadre (4).

2. Raquette (2) selon la revendication 1, dans laquelle la mousse (6 ; 48 ; 62 ; 72 ; 88 ; 102 ; 114) a une densité égale ou inférieure à 0,50 g/cm³.

3. Raquette (2) selon la revendication 1 ou 2, dans laquelle la mousse (6 ; 48 ; 62 ; 72 ; 88 ; 102 ; 114) présente une "CLD-25%" (pression nécessaire pour déformer la mousse de 25 %), mesurée en accord avec la norme "JIS K6254", égale ou inférieure à 0,10 MPa.

4. Raquette (2) selon l'une quelconque des revendications 1 à 3, dans laquelle un angle central θ de la mousse (6 ; 102) à un point central (O) du cadre (4) est égal ou supérieur à 100°, ledit angle central θ étant formé entre une extrémité (34) de la mousse, le point central (O) du cadre (4) et l'autre extrémité (36) de la mousse.

5. Raquette (2) selon l'une quelconque des revendications 1 à 4, dans laquelle les bulles sont formées par moussage d'un agent de moussage du type à décomposition thermique.

6. Procédé pour fabriquer une raquette (2) comprenant un cadre (4) ayant une tête (8 ; 46 ; 58 ; 70 ; 86 ; 100) formée en résine renforcée par des fibres, dans laquelle la tête (8 ; 46 ; 58 ; 70 ; 86 ; 100) est creuse, ladite tête creuse (8 ; 46 ; 58 ; 70 ; 86 ; 100) inclut une partie intérieure (16 ; 52 ; 62 ; 74 ; 90), une partie extérieure (18 ; 52 ; 68 ; 80 ; 96) et deux parties médianes (20 ; 54 ; 66 ; 78 ; 94), dans lequel la partie intérieure (16 ; 52 ; 62 ; 74 ; 90), la partie extérieure (18 ; 52 ; 68 ; 80 ; 96) et les deux parties médianes (20 ; 54 ; 66 ; 78 ; 94) ont chacune une surface intérieure formant des surfaces intérieures du cadre (4) ; et
une mousse (6 ; 48 ; 62 ; 72 ; 88 ; 102 ; 114) réunie à une partie des surfaces intérieures du cadre (4) et contenant des bulles,
dans lequel la mousse (6 ; 48 ; 62 ; 72 ; 88 ; 102 ; 114) occupe partiellement un espace du cadre (4),
dans lequel de l'air est présent dans la portion restante de l'espace du cadre (4), et
dans lequel, dans une section transversale de la raquette (2), un rapport P d'une superficie de la mousse (6 ; 48 ; 62 ; 72 ; 88 ; 102 ; 114) sur une superficie S1 de l'espace du cadre (4) est égal ou supérieur à 5 % et est égal ou inférieur à 50 %, ladite superficie S1 de l'espace du cadre (4) étant une superficie entourée par les surfaces intérieures du cadre (4), et le rapport P est mesuré au niveau d'une section transversale perpendiculaire à une direction dans laquelle s'étend le cadre (4) à une position où la mousse (6 ; 48 ; 62 ; 72 ; 88 ; 102 ; 114) est présente dans le cadre (4), le procédé comprenant les étapes consistant à :
stratifier un morceau de mousse (40a, 40b ; 84 ; 114a ; 114b) contenant des bulles sur une partie d'une surface d'un préimprégné (38 ; 82 ; 112) incluant une résine en matrice et des fibres ;
enrouler le préimprégné (38 ; 82 ; 112) sous une forme tubulaire pour localiser les le morceau de mousse (20) sur une surface intérieure du préimprégné (38 ; 82 ; 112) ; et
laisser durcir la résine de matrice.
